Europäisches Patentamt

European Patent Office

Office européen des brevets

(11) Veröffentlichungsnummer: **0 397 641 B1**

(12) **EUROPÄISCHE PATENTSCHRIFT**

(45) Veröffentlichungstag der Patentschrift: **05.07.95**

(51) Int. Cl.⁶: **G01N 21/64**

(21) Anmeldenummer: **90890124.2**

(22) Anmeldetag: **19.04.90**

(54) **Verfahren zur quantitativen Bestimmung zumindest eines chemischen Parameters eines Probenmediums.**

(30) Priorität: **25.04.89 AT 1000/89**

(43) Veröffentlichungstag der Anmeldung:
**14.11.90 Patentblatt 90/46**

(45) Bekanntmachung des Hinweises auf die
Patenterteilung:
**05.07.95 Patentblatt 95/27**

(84) Benannte Vertragsstaaten:
**DE FR GB**

(56) Entgegenhaltungen:
**EP-A- 0 214 768**
**EP-A- 0 242 527**
**US-A- 4 822 746**

**ANAL. CHEM. Band 59, Nr. 3, Februar 1987, Seiten 437-439; D.M. JORDAN et al.: "Physiological pH Fiber-Optic Chemical Sensor Based on Energy Transfer"**

**APPLIED SPECTROSCOPY Band 42, Nr. 6, August 1988, Seiten 1009-1011, Frederick, MD, US; A. SHARMA et al.: "Fiberoptic Oxygen Sensor Based on Fluorescence Ouenching and Energy Transfer"**

**SPECTROSCOPY Band 2, Nr. 4, April 1987, Seiten 38-48; S.M. ANGEL: "Optrodes: Chemically Selective Fiber-Optic Sensors"**

(73) Patentinhaber: **AVL Medical Instruments AG
Stettemerstrasse 28
CH-8207 Schaffhausen (CH)**

(72) Erfinder: **Wolfbeis, Otto S., Dr.
Im Hoffeld 32
A-8046 Graz (AT)**
Erfinder: **Leiner, Marco Jean-Pierre, Dr.
Rosenberggürtel 39
A-8010 Graz (AT)**

(74) Vertreter: **Krause, Walter, Dr. Dipl.-Ing. et al
Postfach 200
Singerstrasse 8
A-1014 Wien (AT)**

**Beschreibung**

Die Erfindung betrifft ein Verfahren zur quantitativen Bestimmung zumindest eines chemischen Parameters eines Probenmediums, bei welchem zwei in räumlich engem Kontakt stehende Substanzen verwendet werden, als erste Substanz ein auf den zu bestimmenden Parameter nicht ansprechender Fluorophor mit einem Anregungs- und einem Emissionsspektrum und als zweite Substanz eine auf den zu bestimmenden Parameter des Probenmediums durch Änderung ihres Absorptionsspektrums reagierende Substanz, wobei das Emissionsspektrum des Fluorophors zumindest teilweise mit dem Absorptionsspektrum der zweiten Substanz überlappt.

Die Bestimmung von physikalischen oder chemischen Parametern insbesondere die Bestimmung von in einem Probenmedium enthaltenen Stoffen mit Hilfe optischer Sensoren hat in den letzten Jahren bedeutende Fortschritte gemacht. Solche optischen Sensoren (Optoden) bestehen üblicherweise aus einem Indikator, welcher auf einen festen Träger aufgebracht wird und mit der Probe in Kontakt steht. Die durch den zu bestimmenden Parameter hervorgerufene Änderung zumindest einer optischen Eigenschaft des Indikators wird in einem optischen System, bestehend aus einer Lichtquelle, optischen Filtern, eventuell faseroptischen Lichtleitern, und Photodetektoren gemessen.

Man unterscheidet zwischen absorptions-, reflektions- und fluoreszenz-optischen Sensoren. In den bisher bekannten Ausführungsformen wird überwiegend die Fluoreszenzintensität als Meßparameter herangezogen, wobei die Konzentration [Q] einer die Fluoreszenz des Indikators löschenden Substanz Q nach folgender Gleichung bestimmt wird:

$$F_o/F = I + K_{sv}[Q] \qquad (1)$$

Hier bedeuten $F_o$ und $F$ die Fluoreszenzintensitäten des durch Q gelöschten Indikators in Abwesenheit bzw. in Gegenwart des Löschers in einer Konzentration [Q]. $K_{sv}$ ist eine indikatorspezifische Konstante.

Im eingangs genannten Verfahren entsprechend der EP-A 214 768 wird nun zur Bestimmung bestimmter Stoffe eine Methode beschrieben, die auf einer Fluoreszenzminderung aufgrund eines Energietransfers zwischen einer fluoreszierenden Substanz (Fluorophor) und einer Absorbersubstanz welche in räumlich engem Kontakt auf einem Träger immobilisiert werden. Das Emissionsspektrum der nach Anregung fluoreszierenden Substanz überlappt mit dem Absorptionsspektrum der Absorbersubstanz. Während der Fluorophor nicht auf den zu bestimmenden Stoff reagiert, kommt es bei Probenkontakt zu einer Reaktion mit der Absorbersubstanz, durch welche der Grad der Überlappung des Emissions- und des Absorptionsspektrums in Abhängigkeit von der Konzentration des zu bestimmenden Stoffes variiert. Die dadurch erzielbare Änderung in der Fluoreszenzintensität wird gemessen und als Mab für den zu bestimmenden Parameter verwendet.

Die Nachteile der Intensitätsmessung bestehen nun vor allem darin, daß die Fluoreszenzintensität F durch Schwankungen der Intensität der Anregungslichtquelle beeinflußt wird. Weiters ist F von der Konzentration des Fluorophors abhängig, sodaß durch Ausbleichen desselben Drifts entstehen. Schließlich können auch Photodetektoren in ihrer Empfindlichkeit variieren, was sich wiederum auf die gemessene Intensität F auswirkt.

In jenen Fällen, wo die analytische Meßgröße als dynamischer Löscher der Fluoreszenz eines Indikators wirkt, kann man auch die Änderung der Fluoreszenzabklingeit als Parameter heranziehen, da nach Stern-Volmer zwischen der Fluoreszenzabklingzeit in Gegenwart (t) und in Abwesenheit ($t_o$) eines Löschers der Konzentration [Q] folgende Beziehung gilt:

$$t_o/t = I + K_{sv}[Q] \qquad (2)$$

Dynamische Löscher sind jene Fluoreszenzlöscher, welche die Fluoreszenz eines Moleküls dadurch löschen, daß sie den angeregten Zustand eines Moleküls strahlungslos als Folge eines dynamischen Kolissionsprozesses desaktivieren. Dies steht im Gegensatz zum statischen Löscher, welcher seine Wirkung dadurch ausübt, daß er mit dem Fluoreszenten schon im Grundzustand einen losen Komplex bildet, welcher nicht fluoresziert. Die beiden Löschmechanismen haben unterschiedliche Auswirkung auf die Abklingzeit: Der dynamische Löscher vermindert die Abklingzeit nach (2), der statische hingegen nicht.

Typische Sensoren, welche auf der Grundlage der Messung der Abklingzeit beruhen, wurden in der DE-OS 3 346 810 beschrieben. Der Vorteil der Messung der Fluoreszenzabklingzeit besteht vor allem darin, daß die Methode deutlich weniger fehleranfällig ist, als wenn man die Konzentration des Löschers Q über die Messung der Fluoreszenzintensität bestimmt, da die Lebenszeit t eines Fluorophors unabhängig von der Intensität der Lichtquelle, der Konzentration des Farbstoffes und der Empfindlichkeit des Photodetektors ist.

Somit sind Lebenszeitmessungen den Intensitätsmessungen trotz des erforderlichen höheren meßtechnischen Aufwandes beträchtlich überlegen.

Bisher bekannte optische Verfahren auf Grundlage der Messung der Abklingzeit sind aber nur für dynamische Löscher der Fluoreszenz geeignet, also z.B. Sauerstoff, $SO_2$ oder Halothane. Zur Bestimmung beispielsweise des pH-Wertes oder anderer analytischer Parameter, welche mit an sich bekannten Indikatoren Farbänderungen bzw. Umschläge ergeben, sind Lebenszeitmessungen ungeeignet, da die farbbildenden Reaktionen im elektrischen Grundzustand stattfinden.

In diesem Zusammenhang sei noch auf die EP-A-0 242 527 verwiesen, welche ein Verfahren für die Bestimmung von chemischen Analyten mit Hilfe von Antigenen oder Antikörpern beschreibt, also gewissen Proteinen, welche in der Lage sind, den Analyten spezifisch zu binden. Es handelt sich hier um einen sogenannten homogenen Immuntest, somit ein Verfahren, in welchem ein Antigen einen spezifischen Antikörper bindet. Durch die eintretende Bindung wird ein Energietransfer von einem Donorfluoreszenten, welcher an einen Bindungspartner gebunden ist, an einen Akzeptorfluoreszenten, welcher an den anderen Bindungspartner gebunden ist, ermöglicht, solange eine spektrale Überlappung besteht und sich Donor und Akzeptor innerhalb des Förster-Radius befinden.

Aufgabe der vorliegenden Erfindung ist es, das eingangs erwähnte Verfahren so weiterzubilden, daß bisher mit der vorteilhaften Methode der Messung der Abklingzeit nicht erfassbare Parameter der quantitativen Bestimmung zugeführt werden können.

Diese Aufgabe wird gemäß der vorliegenden Erfindung dadurch gelöst, daß als zweite Substanz ein die Fluoreszenz des Fluorophors beeinflussender Chromophor verwendet wird, dessen Absorptionsmaximum abhängig vom zu bestimmenden Parameter verschoben wird und daß die durch Energietransfer zwischen Chromophor und Fluorophor hervorgerufene Verringerung der Fluoreszenzabklingzeit t zur quantitativen Bestimmung des chemischen Parameters herangezogen wird. Überraschenderweise hat sich gezeigt, daß durch den Energietransfer zwischen Chromophor und Fluorophor eine bisher nur bei der dynamischen Fluoreszenzlöschung bekannte Änderung der Fluoreszenzabklingzeit auftritt, welcher Effekt erfindungsgemäß zur Bestimmung der Parameter herangezogen wird.

Abhängig von der Breite der Absorptionsbande des nichtf luoreszierenden Chromophors wird die Emission des Fluorophors beeinflußt, wodurch es zu einer Reduktion seiner Abklingzeit kommt. Dadurch können überraschenderweise auch Substanzen über die Messung der Abklingzeit erfaßt werden, die nicht als dynamische Löscher der Fluoreszenzstrahlung des Fluorophors auftreten.

Das beschriebene Verfahren hat somit gegenüber herkömmlichen Verfahren eine beträchtlich verbesserte Langzeitstabilität, was die Verwendung entsprechender Meßanordnungen in Meßstationen erlaubt, wobei sich die bisher erforderlichen häufigen Kalibrationen erübrigen.

Die theoretischen Grundlagen für diesen Effekt bildet der sogenannte Energietransfer (ET). Danach kann elektronische Energie von einem Donor (hier der Fluorophor) auf einen Akzeptor (hier der analytischsensitive Chromophor) übertragen werden. Freie Photonen treten bei diesem Prozeß nicht auf. Der ET gehorcht der Förster-Gleichung

$$K_{ET} = R_o^6/(r^6 t) \qquad (3)$$

worin $k_{ET}$ die Geschwindigkeitskonstante für den ET bedeutet und $R_o$ bzw. r die sogenannte kritische Distanz bzw. die aktuelle Distanz von Donor und Akzeptor bedeuten. $R_o$ (Förster-Radius) ist jene Distanz, bei welcher die Wahrscheinlichkeit eines Förster-ET gleich groß ist, wie die eines spontanen ET.

Die Effizienz des Energietransfers hängt somit von der Quantenausbeute des Donors, der Überlappung des Emissionsspektrums des Akzeptors, und deren relativen Orientierung und Entfernung ab. Typische Übertragungsdistanzen liegen zwischen 0.5 - 10 nm. Die Entfernung zwischen Donor und Akzeptor hat einen großen Einfluß auf den Energietransfer da sie von ihrer 6. Potenz abhängt.

Eine erfindungsgemäße Anwendung sieht vor, daß zur Bestimmung der Wasserstoffionenkonzentration als Fluorophor 7-Diethylaminocoumarin-3-carbonsäure und als Chromophor Methylorange verwendet wird, bzw. daß zu deren Bestimmung als Fluorophor 8-Aminopyren-1,3,6-trisulfonat und als Chromophor Phenolrot verwendet wird.

Vorteilhafterweise sind Fluorophor (Donor) und Chromophor (Akzeptor) kovalent miteinander verbunden.

In der untenstehenden Tabelle sind zur Bestimmung unterschiedlicher chemischer Parameter Beispiele von Fluorophor/Chromophor-Kombinationen angegeben, wobei darauf geachtet wurde, daß die Fluoreszenzabklingzeit der verwendeten Fluorophore meßtechnisch erfaßbar ist.

3

| Fluorophor (Donor) | Chromophor (Akzeptor) | Meßwellen länge (nm) | Chem.Parameter |
|---|---|---|---|
| 7-Diethylaminocoumarin-3-carbonsäure | Methylorange | 480 | $H^+$ |
| 8-Aminopyren-1,3,6-trisulfonat | Phenolrot | 490 | $H^+$ |
| Sulfrhodamine 101 | Alizarin-Komplexon | 590 | $Ba^{2+}$ |
| Rhodamine 6G | Beryllon | 570 | $Mg^{2+}$ |
| 2,7-Dichlorfluorescein | Brenzcatechinviolett | 540 | $Cd^{2+}$ |
| Fluorescein | Chromazurol S | 520 | $Al^{3+}$ |
| Coumarin 7 | Eriochromblack T | 485 | $Ca^{2+},Pb^{2+}$ |
| Coumarin 343 | Murexid | 450 | $Cu^{2+}$ |
| Coumarin 334 | Zincon | 440 | $Zn^{2+}$ |

**Patentansprüche**

1. Verfahren zur quantitativen Bestimmung zumindest eines chemischen Parameters eines Probenmediums, bei welchem zwei in räumlich engem Kontakt stehende Substanzen verwendet werden, wobei gilt:

$$k_{ET} = R_o^6 / (r^6 t)$$

worin $k_{ET}$ die Energietransferrate zwischen den beiden Substanzen, $R_o$ die kritische Distanz (Förster-Radius) und r die aktuelle Distanz zwischen Donor und Akzeptor der beiden Substanzen und t die Abklingzeit ist, daß als erste Substanz ein auf den zu bestimmenden Parameter nicht ansprechender Fluorophor mit einem Anregungs- und einem Emissionsspektrum und als zweite Substanz eine auf den zu bestimmenden Parameter des Probenmediums durch Änderung ihres Absorptionsspektrums reagierende Substanz verwendet wird, wobei das Emissionsspektrum des Fluorophors zumindest teilweise mit dem Absorptionsspektrum der zweiten Substanz überlappt, **dadurch gekennzeichnet**, daß als zweite Substanz ein die Fluoreszenz des Fluorophors beeinflussender Chromophor verwendet wird, dessen Ansorptionsmaximum abhängig vom zu bestimmenden Parameter verschoben wird und daß die durch Energietransfer zwischen Chromophor und Fluorophor hervorgerufene Verringerung der Fluoreszenzabklingzeit t des Fluorophors zur quantitativen Bestimmung des chemischen Parameters herangezogen wird.

2. Verfahren nach Anspruch 1, **dadurch gekennzeichnet**, daß zur Bestimmung der Wasserstoffionenkonzentration als Fluorophor 7-Diethylaminocoumarin-3-carbonsäure und als Chromophor Methylorange verwendet wird.

3. Verfahren nach Anspruch 1, **dadurch gekennzeichne**t, daß zur Bestimmung der Wasserstoffionenkonzentration als Fluorophor 8-Aminopyren-1,3,6-trisulfonat und als Chromophor Phenolrot verwendet wird.

4. Verfahren nach Anspruch 1, **dadurch gekennzeichnet**, daß zur Bestimmung der Bariumionenkonzentration als Fluorophor Sulfrhodamine 101 und als Chromophor Alizarin-Komplexon verwendet wird.

5. Verfahren nach Anspruch 1, **dadurch gekennzeichnet**, daß zur Bestimmung der Magnesiumionenkonzentration als Fluorophor Rohdamine 6G und als Chromophor Beryllon verwendet wird.

6. Verfahren nach Anspruch 1, **dadurch gekennzeichnet**, daß zur Catmiumionenkonzentration als Fluorophor 2,7-Dichlorfluorescein und als Chromophor Brenzcatechinviolett verwendet wird.

7. Verfahren nach Anspruch 1, **dadurch gekennzeichnet**, daß zur Bestimmung der Aluminiumionenkonzentration als Fluorophor Fluorescein und als Chromophor Chromazurol S verwendet wird.

8. Verfahren nach Anspruch 1, **dadurch gekennzeichnet**, daß zur Bestimmung der Calzium- bzw. der Bleiionenkonzentration als Fluorophor Coumarin 7 und als Chromophor Eriochromblack T verwendet wird.

**9.** Verfahren nach Anspruch 1, **dadurch gekennzeichnet**, daß zur Bestimmung der Kupferionenkonzentration als Fluorophor Coumarin 343 und als Chromophor Murexid verwendet wird.

**10.** Verfahren nach Anspruch 1, **dadurch gekennzeichnet**, daß zur Bestimmung der Zinkionenkonzentration als Fluorophor Coumarin 334 und als Chromophor Zincon verwendet wird.

**11.** Verfahren nach einem der Ansprüche 1 bis 10, **dadurch gekennzeichnet**, daß Fluorophor (Donor) und Chromophor (Akzeptor) kovalent miteinander verbunden sind.

## Claims

**1.** A method for quantitative determination of one or more chemical parameters of a sample medium, in which two substances are used that are closely adjacent to each other, and where the following relationship is valid:

$$k_{ET} = R_o{}^6 \, / \, (r^6 \, t)$$

$k_{ET}$ denoting the energy transfer rate between the two substances, $R_o$ the critical distance (Förster radius), and r the actual distance between donor and acceptor of the two substances, and t the decay time, where the first substance is a fluorophor with an excitation spectrum and an emission spectrum, which is not responsive to the parameter to be determined, and the second substance is an agent responding to the parameter of the sample medium to be determined by a change in its absorption spectrum - the emission spectrum of the fluorophor overlapping the absorption spectrum of the second substance at least partially -, **characterized in that** a chromophor influencing the fluorescence of the fluorophor is used as a second substance, whose absorption maximum is shifted in dependence of the parameter to be determined, and that the decrease in fluorescence decay time t of the fluorophor caused by the energy transfer between chromophor and fluorophor is used for quantitative determination of the chemical parameter.

**2.** A method according to claim 1, **characterized in that** for determining hydrogen ion concentration 7-diethylaminocoumarin-3-carboxylic acid is used as a fluorophor, and methyl orange as a chromophor.

**3.** A method according to claim 1, **characterized in that** for determining hydrogen ion concentration 8-aminopyrene-1,3,6-trisulphonate is used as a fluorophor and phenol red as a chromophor.

**4.** A method according to claim 1, **characterized in that** for determining barium ion concentration sulphorhodamine 101 is used as a fluorophor and alizarin-complexon as as a chromophor.

**5.** A method according to claim 1, **characterized in that** for determining magnesium ion concentration rhodamine 6G is used as a fluorophor and beryllone as a chromophor.

**6.** A method according to claim 1, **characterized in that** for determining cadmium ion concentration 2,7-dichlorofluorescein is used as a fluorophor and catechol violet as a chromophor.

**7.** A method according to claim 1, **characterized in that** for determining aluminium ion concentration fluorescein is used as a fluorophor and chrome azurol S as a chromophor.

**8.** A method according to claim 1, **characterized in that** for determining calcium or lead ion concentration coumarin 7 is used as a fluorophor and eriochrome black T as a chromophor.

**9.** A method according to claim 1, **characterized in that** for determining copper ion concentration coumarin 343 is used as a fluorophor and murexide as a chromophor.

**10.** A method according to claim 1, **characterized in that** for determining zinc ion concentration coumarin 334 is used as a fluorophor and zincone as a chromophor.

**11.** A method according to any of claims 1 to 10, **characterized in that** fluorophor (donor) and chromophor (acceptor) are covalently attached to each other.

**Revendications**

1. Procédé de dosage quantitatif d'au moins un paramètre chimique d'un milieu échantillon, dans lequel on utilise deux substances en contact spatial étroit, où est valable la relation :

$$k_{ET} = R_O^6 / (r^6 t)$$

dans laquelle $k_{ET}$ est le taux de transfert d'énergie entre les deux substances, $R_O$ est la distance critique (rayon de Förster) et r est la distance réelle entre le donneur et l'accepteur qui constituent les deux substances, et t est le temps d'extinction, et qu'on utilise comme première substance un fluorophore qui ne réagit pas au paramètre à déterminer avec un spectre d'excitation et un spectre d'émission, et comme deuxième substance, une substance qui réagit au paramètre à déterminer du milieu échantillon par modification de son spectre d'absorption, le spectre d'émission du fluorophore recouvre au moins partiellement le spectre d'absorption de la deuxième substance, caractérisé en ce qu'on utilise comme deuxième substance un chromophore qui modifie la fluorescence du fluorophore, dont le maximum d'absorption est décalé en fonction du paramètre à mesurer, et qu'on utilise la diminution du temps d'extinction t de fluorescence du fluorophore provoquée par le transfert d'énergie provoqué entre le chromophore et le fluorophore pour déterminer quantitativement le paramètre chimique.

2. Procédé selon la revendication 1, caractérisé en ce qu'on utilise comme fluorophore pour déterminer la concentration en ion hydrogène, l'acide 7-diéthylaminocoumarine-3-carboxylique et comme chromophore le méthylorange.

3. Procédé selon la revendication 1, caractérisé en ce qu'on utilise comme fluorophore pour déterminer la concentration en ion hydrogène, le 8-aminopyrène-1,3,6-trisulfonate et comme chromophore le rouge phénol.

4. Procédé selon la revendication 1, caractérisé en ce que pour déterminer la concentration en ions baryum, on utilise comme fluorophore la sulforhodamine 101 et comme chromophore le complexon d'alizarine.

5. Procédé selon la revendication 1, caractérisé en ce que pour déterminer la concentration en ions magnésium, on utilise comme fluorophore, la rhodamine 6G et comme chromophore le béryllon.

6. Procédé selon la revendication 1, caractérisé en ce que pour déterminer la concentration en ion cadmium, on utilise comme fluorophore la 2,7-dichlorofluorescéine et comme chromophore le violet de benzocatéchine.

7. Procédé selon la revendication 1, caractérisé en ce que pour déterminer la concentration en ions aluminium, on utilise comme fluorophore la fluorescéine et comme chromophore le chromazurol S.

8. Procédé selon la revendication 1, caractérisé en ce que pour déterminer la concentration en ions plomb ou calcium, on utilise comme fluorophore, la coumarine 7 et comme chromophore le noir eriochrome T.

9. Procédé selon la revendication 1, caractérisé en ce que pour déterminer la concentration en ions cuivre, on utilise comme fluorophore la coumarine 343 et comme chromophore la murexide.

10. Procédé selon la revendication 1, caractérisé en ce que pour déterminer la concentration en ions zinc, on utilise comme fluorophore la coumarine 334 et comme chromophore le zincon.

11. Procédé selon l'une des revendications 1 à 10, caractérisé en ce que le fluorophore (donneur) et le chromophore (accepteur) sont liés de manière covalente.